(19) **Europäisches Patentamt**
**European Patent Office**
**Office européen des brevets**

(11) **EP 4 783 242 A1**

(12) **EUROPEAN PATENT APPLICATION**

(43) Date of publication:
**29.07.2026 Bulletin 2026/31**

(21) Application number: **25214970.3**

(22) Date of filing: **11.11.2025**

(51) International Patent Classification (IPC):
**H01M 4/04** $^{(2006.01)}$        **H01M 10/44** $^{(2006.01)}$
**H01M 10/0525** $^{(2010.01)}$

(52) Cooperative Patent Classification (CPC):
**H01M 10/446; H01M 4/0445;** H01M 10/0525

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.01.2025 JP 2025002249**

(71) Applicant: **Prime Planet Energy & Solutions, Inc. Tokyo 103-0022 (JP)**

(72) Inventors:
- **MAEDA, Masaki**
  **Tokyo, 103-0022 (JP)**
- **KAMIYAMA, Yuma**
  **Tokyo, 103-0022 (JP)**

(74) Representative: **Kuhnen & Wacker**
**Patent- und Rechtsanwaltsbüro PartG mbB**
**Prinz-Ludwig-Straße 40 A**
**85354 Freising (DE)**

(54) **MANUFACTURING METHOD OF NONAQUEOUS ELECTROLYTE SECONDARY BATTERY**

(57)    A herein disclosed manufacturing method of a nonaqueous electrolyte secondary battery is a manufacturing method of a nonaqueous electrolyte secondary battery that includes an electrode assembly having a positive electrode and a negative electrode and that includes a nonaqueous electrolyte, the manufacturing method including:

an assembly body preparing step for preparing an assembly body in which the electrode assembly and the nonaqueous electrolyte are accommodated by a battery case;

an initial electrically charging step for electrically charging the assembly body until having a predetermined voltage V0;

an aging step for holding the assembly body at 45°C or more for 3 hours or more after the initial electrically charging step;

a voltage adjusting step for adjusting the assembly body to have a voltage V1 being less than 3.585 V after the aging step;

a temperature history adjusting step for treating a temperature of the assembly body at a temperature decrease starting time to be T1 after the voltage adjusting step, for cooling down the assembly body until having a temperature T2 being lower than the T1, and for heating up the assembly body until having a temperature T3 being higher than the T2; and

a self electrical discharge inspecting step for performing a self electrical discharge inspection at a temperature T4 being higher than the T2 after the temperature history adjusting step.

Assembling step
↓
Initial electrically charging step
↓
Aging step
↓
Voltage adjusting step
↓
Temperature history adjusting step
↓
Self electrical discharge inspecting step

FIG.6

**Description**

BACKGROUND

1. Technical Field

The present disclosure relates to enhancement of a slight short circuit cell inspection precision with reducing a temperature dependency of a voltage, for more detail, relates to a manufacturing method of a nonaqueous electrolyte secondary battery in which said enhancement is implemented.

2. Background

A nonaqueous electrolyte secondary battery, such as lithium ion secondary battery, is suitably used for a portable power supply of a personal computer, a portable terminal or the like, for a vehicle drive power supply of a BEV (electric vehicle), a HEV (hybrid electric vehicle), a PHEV (plug-in hybrid electric vehicle) or the like, and the like. From a perspective of a safety property when these products are used, it is desired for these products not to use the nonaqueous electrolyte secondary battery (cell) in which an inside short circuit is caused even if the inside short circuit is at a slight level (a slight short circuit).

Thus, a method for identifying one in which the inside short circuit is caused at a manufacturing step of the nonaqueous electrolyte secondary battery. As a prior art disclosing this kind of technique, for example, it is possible to refer Patent Document 1. Patent Document 1 (Japanese Patent Application Publication No. 2012-84332) discloses a technique for measuring a self-discharge voltage so as to determine whether the inside short circuit is caused or not at a manufacturing step of the lithium ion secondary battery.

Patent Document 1 discloses the technique in which the lithium ion secondary battery having been electrically charged in a range of electrical charge voltage 3.52 V to 3.6 V at the manufacturing step is electrically self-discharged and in which it is determined, on a basis of a battery voltage difference between one before the electrical self-discharge and one after the electrical self-discharge, whether the inside short circuit is caused or not. Although the battery voltage fluctuates according to a temperature change, if it is within the range of the above described electrical charge voltage, a change amount of it is small and thus it is possible to measure the battery voltage at a high precision, in other words, to precisely determine the presence or absence of the inside short circuit.

However, the battery voltage of the nonaqueous electrolyte secondary battery, such as lithium ion secondary battery, is not only dependent on a temperature at the measurement time but also going to fluctuate by a history of the temperature change till the battery voltage is measured. Thus, there are some fears that the inspection precision for determining the presence or absence of the inside short circuit is reduced by the history of the temperature change until the self electrical discharge inspection is performed, even if the electrical charge is performed to be an electrical charge voltage at which the change amount of the battery voltage according to the temperature change is small.

SUMMARY

The present disclosure is developed in view of the above described issue, and has an object to provide a manufacturing method of a nonaqueous electrolyte secondary battery, the method being able to precisely divide a cell in which the slight inside short circuit is caused and a cell in which the slight inside short circuit is not caused at the manufacturing step of the nonaqueous electrolyte secondary battery.

A herein disclosed manufacturing method of a nonaqueous electrolyte secondary battery is a manufacturing method of a nonaqueous electrolyte secondary battery that includes an electrode assembly having a positive electrode and a negative electrode and that includes a nonaqueous electrolyte. Then, it includes:

assembling step for preparing an assembly body in which the electrode assembly and the nonaqueous electrolyte are accommodated by a battery case;

an initial electrically charging step for electrically charging the assembly body until having a predetermined voltage V0;

an aging step for holding the assembly body at 45°C or more for 3 hours or more after the initial electrically charging step;

a voltage adjusting step for adjusting the assembly body to have a voltage V1 being less than 3.585 V after the aging step;

a temperature history adjusting step for treating a temperature of the assembly body at a temperature decrease starting time to be T1 after the voltage adjusting step, for cooling down the assembly body until having a temperature T2 being lower than the T1, and for heating up the assembly body until having a temperature T3 being higher than the T2; and

a self electrical discharge inspecting step for performing a self electrical discharge inspection at a temperature T4 being higher than the T2 after the temperature history adjusting step.

According to the manufacturing method of the nonaqueous electrolyte secondary battery having the above described configuration, the temperature dependency of the battery voltage is negative, and it is possible to reduce the absolute value of it. Then, it is possible to measure the battery voltage at a higher precision, in other words, to inspect whether an inside short circuit is present or absence.

In one suitable aspect of the herein disclosed manufacturing method of the nonaqueous electrolyte secondary battery, the negative electrode includes a negative electrode substrate and a negative electrode active material layer that is formed on at least one surface of the negative electrode substrate, a density of the negative electrode active material layer is equal to or more than 1.4 g/mL, and an application amount is equal to or more than 185 g/m$^2$. By this, because of the increase in the negative electrode potential according to the temperature decrease of the secondary battery, an electrical charge carrier (a lithium ion in a situation of the lithium ion secondary battery) is released from an electric double layer on a negative electrode interface into the electrolyte. Then, because it is not easy for the electrical charge carrier to come back into the electric double layer on the negative electrode interface, it is possible to further reduce the temperature dependency of the battery voltage derived from a concentration change of the electrical charge carrier in the electric double layer of the negative electrode interface which is caused by a hereafter temperature fluctuation of the secondary battery.

In one suitable aspect of the herein disclosed manufacturing method of the nonaqueous electrolyte secondary battery, a temperature difference between the T2 and the T4 is equal to or more than 3°C. By this, release of the electrical charge carrier around the negative electrode is accelerated because of the increase in the negative electrode potential according to the temperature reduction of the secondary battery, and thus it is possible to further reduce the temperature dependency of the battery voltage.

## BRIEF DESCRIPTION OF THE DRAWINGS

FIG. 1 is a perspective view that schematically shows a nonaqueous electrolyte secondary battery.
FIG. 2 is a longitudinal cross section view that is schematically shown along an II-II of FIG. 1.
FIG. 3 is a perspective view that schematically shows an electrode assembly group attached to a sealing plate.
FIG. 4 is a perspective view that schematically shows an electrode assembly on which a positive electrode second current collector part and a negative electrode second current collector part are attached.
FIG. 5 is a schematic view that shows a configuration of a wound electrode assembly.
FIG. 6 is a flow that shows a part of a manufacturing method of a nonaqueous electrolyte secondary battery.
FIG. 7 (A) is a graph that shows a temperature dependency of a battery voltage which is measured under 25°C environment at an arbitrary electrical charge voltage. FIG. 7 (B) is a graph in which a part of FIG. 7 (A) is enlarged.
FIG. 8 is a view that schematically shows a temperature change process of an assembly body at a manufacturing step.
FIG. 9 (A) is a graph that shows a temperature dependency of a battery voltage in accordance with one embodiment.
FIG. 9 (B) is a graph in which a part of FIG. 9 (A) is enlarged.

## DETAILED DESCRIPTION

Below, some embodiments of the herein disclosed technique would be explained, while referring to drawings. In the following accompanying drawings, the same numerals and signs are given to the members/parts providing the same effect. Additionally, the dimensional relation (a length, a width, a thickness, or the like) in each drawing does not reflect the actual dimensional relation. Incidentally, the matters other than matters particularly mentioned in this description and required for practicing the present disclosure (for example, a general configuration of an electricity storage device and a manufacturing step, which do not characterize the present disclosure) can be grasped as design matters of those skilled in the art based on the related art in the present field. The herein disclosed technique can be executed based on the contents disclosed in the present description, and on the technical common sense in the present field. In addition, the explanation described below is not intended to restrict the present disclosure into embodiments described below.

A wording "A to B" representing a range in the present description means "equal to or more than A and not more than B". In addition, it semantically covers meanings "more than A" and "less than B". In addition, the wording "electricity storage device" in the present description represents a device that can perform an electrical charge and an electrical discharge. The electricity storage device semantically covers a battery, such as primary battery and secondary battery (for example, a nonaqueous electrolyte secondary battery, such as lithium ion secondary battery, a nickel hydrogen battery, and the like), and a capacitor (a physical battery) such as electric double layer capacitor. In addition, the electrolyte might be a liquid-type electrolyte (electrolytic solution), a gel-type electrolyte, or a solid-type electrolyte. Below, the lithium ion secondary battery (below, which might be simply referred to as "battery 100") being one embodiment of the herein disclosed electricity storage device would be explained as an example.

1. Configuration of nonaqueous electrolyte secondary battery

A wording "nonaqueous electrolyte secondary battery" in the present description is a term denoting an electricity storage device that is capable of repeatedly performing an electrical charge and discharge according to a movement of an electrical charge carrier between a positive electrode and a negative electrode and denoting general ones which include a nonaqueous type electrolyte, and is a concept semantically covering a so-called storage battery (a chemical battery), such as lithium ion secondary battery and sodium ion secondary battery, and the capacitor (a physical battery), such as electric double layer capacitor. Below, main configuration materials of the nonaqueous electrolyte secondary battery in accordance with the present disclosure will be described. Incidentally, as configuration materials not described here of the lithium ion secondary battery and the other nonaqueous electrolyte secondary battery, it is possible to use conventionally known ones.

In the nonaqueous electrolyte secondary battery according to the present disclosure, an electrode assembly containing a positive electrode and a negative electrode and a nonaqueous electrolyte are accommodated at an inside of a battery case.

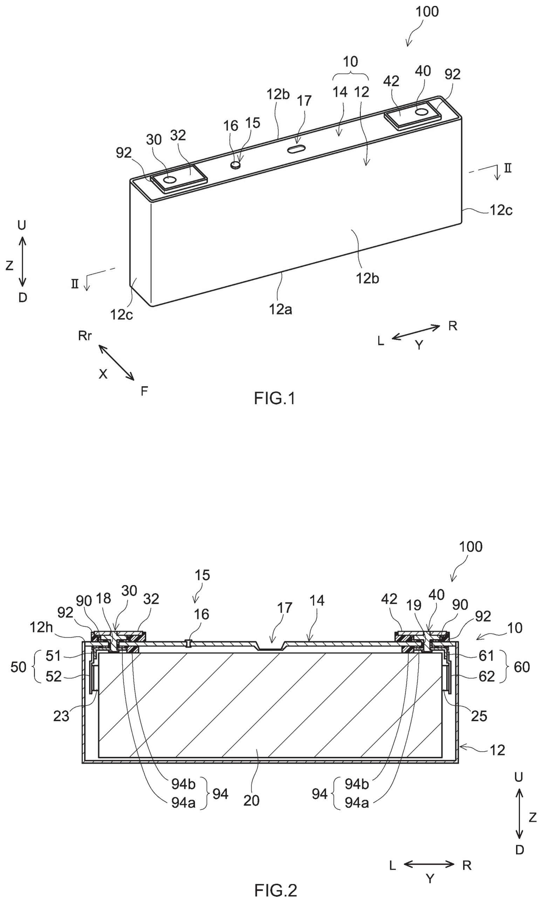

FIG. 1 is a perspective view of a nonaqueous electrolyte secondary battery 100. FIG. 2 is a longitudinal cross section view that is schematically shown along an II-II line of FIG. 1. Incidentally, regarding an explanation described below, reference signs L, R, F, Rr, U, and D in drawings respectively represent left, right, front, rear, up, and down, and reference signs X, Y, and Z in drawings respectively represent a short side direction, a long side direction orthogonal to the short side direction, and a vertical direction of the nonaqueous electrolyte secondary battery 100. The long side direction Y is an example of a first direction disclosed herein, and the short side direction is an example of a second direction disclosed herein. However, these are merely directions for convenience sake of explanation, and which is not intended to restrict the disposed form of the nonaqueous electrolyte secondary battery 100 at all.

As shown in FIG. 2, the nonaqueous electrolyte secondary battery 100 includes a battery case 10, an electrode assembly group 20, a positive electrode terminal 30, a negative electrode terminal 40, a positive electrode current collector part 50, and a negative electrode current collector part 60. Although the illustration is omitted, the nonaqueous electrolyte secondary battery 100 herein further includes a nonaqueous electrolytic solution. The nonaqueous electrolyte secondary battery 100 herein is a lithium ion secondary battery.

The battery case 10 is a housing that is configured to accommodate the electrode assembly group 20. The battery case 10 herein has an outer appearance that is formed in a flat and bottomed rectangular parallelepiped shape (square shape). A material of the battery case 10 might be the same as a material conventionally used, and is not particularly restricted. It is preferable that the battery case 10 is made of metal, and it is more preferable that, for example, the battery case is made of aluminum, aluminum alloy, iron, iron alloy, or the like. As shown in FIG. 2, the battery case 10 includes an outer case 12 including an opening 12h and includes a sealing plate (a lid body) 14 configured to cover the opening 12h.

The outer case 12 includes, as shown in FIG. 1, a bottom wall 12a, a pair of longer side walls 12b that extend from the bottom wall 12a and are opposed mutually, and a pair of shorter side walls 12c that extend from the bottom wall 12a and are opposed mutually. The bottom wall 12a is formed in an approximately rectangular shape. The bottom wall 12a is opposed to the opening 12h. An area size of the shorter side wall 12c is smaller than an area size of the longer side wall 12b. The longer side wall 12b and the shorter side wall 12c are respectively examples of the herein disclosed first side wall and the herein disclosed second side wall. The sealing plate 14 is attached to the outer case 12 to cover the opening 12h of the outer case 12. The sealing plate 14 is opposed to the bottom wall 12a of the outer case 12. The sealing plate 14 is approximately rectangular in a plane view. The battery case 10 is integrated by joining (for example, welding and joining) the sealing plate 14 to a peripheral edge of the opening 12h of the outer case 12. The battery case 10 is airtightly sealed (hermetically sealed).

As shown in FIG. 2, the sealing plate 14 is provided with a liquid injection hole 15, a gas exhaust valve 17, and two terminal taking out holes 18, 19. The liquid injection hole 15 is provided for performing a liquid injection of the electrolytic solution after the sealing plate 14 is assembled to the outer case 12. The liquid injection hole 15 is sealed by a sealing member 16. The gas exhaust valve 17 is configured to be broken when a pressure inside the battery case 10 becomes equal to or more than a predetermined value, so as to exhaust the gas inside the battery case 10 to the outside. The terminal taking out holes 18, 19 are respectively formed on both ends of the sealing plate 14 in the long side direction Y. The terminal taking out holes 18, 19 penetrate the sealing plate 14 in the vertical direction Z. The terminal taking out holes 18, 19 have inner diameters whose sizes respectively allow the positive electrode terminal 30 and the negative electrode terminal 40 before attached to the sealing plate 14 (before a caulking process) to be inserted.

Both of the positive electrode terminal 30 and the negative electrode terminal 40 are fixed to the sealing plate 14. The positive electrode terminal 30 is arranged at one side (at the left side in FIG. 1 and FIG. 2) of the sealing plate 14 in the long side direction Y. The negative electrode terminal 40 is arranged at the other side (at the right side in FIG. 1, and FIG. 2) of the sealing plate 14 in the long side direction Y. As shown in FIG. 1, the positive electrode terminal 30 and the negative electrode terminal 40 are exposed to a surface at an outer side of the sealing plate 14. As shown in FIG. 2, the positive electrode terminal 30 and the negative electrode terminal 40 are configured to be inserted into the terminal taking out holes 18, 19 so as to extend from the inside to the outside of the sealing plate 14. The positive electrode terminal 30 and the negative electrode terminal 40 herein are caulked by the caulking process respectively on peripheral edge portions surrounding the terminal taking out holes 18, 19 of the sealing plate 14. On end parts (lower end parts of FIG. 2) of the positive electrode terminal 30 and the negative electrode terminal 40 at the outer case 12 side, a caulking part is formed.

As shown in FIG. 2, the positive electrode terminal 30 is electrically connected, at the inside of the outer case 12, through a positive electrode current collector part 50 to the positive electrode 22 of the electrode assembly group 20. The negative electrode terminal 40 is electrically connected, at the inside of the outer case 12, through a negative electrode current collector part 60 to the negative electrode 24 of the electrode assembly group 20. The positive electrode terminal 30 and the negative electrode terminal 40 are examples of the herein disclosed terminals.

It is preferable that the positive electrode terminal 30 is made of metal, and it is more preferable that the positive electrode terminal is made of, for example, aluminum or aluminum alloy. It is preferable that the negative electrode terminal 40 is made of metal, and it is more preferable that the negative electrode terminal is made of, for example, copper or copper alloy. The negative electrode terminal 40 might be configured by joining two conductive members so as to be integrated. For example, a portion connected to the negative electrode current collector part 60 might be made of copper or copper alloy, and a portion exposed on the outside surface of the sealing plate 14 might be made of aluminum or aluminum alloy

As shown in FIG. 1, on a surface at the outer side of the sealing plate 14, a plate-shaped positive electrode outside conductive member 32 and a plate-shaped negative electrode outside conductive member 42 are attached. The positive electrode outside conductive member 32 is electrically connected to the positive electrode terminal 30. The negative electrode outside conductive member 42 is electrically connected to the negative electrode terminal 40. The positive electrode outside conductive member 32 and the negative electrode outside conductive member 42 are members to which a bus bar is attached when plural nonaqueous electrolyte secondary batteries 100 are electrically connected to each other. The positive electrode outside conductive member 32 and the negative electrode outside conductive member 42 are preferably made of metal, or more preferably made of, for example, aluminum or aluminum alloy. The positive electrode outside conductive member 32 and the negative electrode outside conductive member 42 are insulated from the sealing plate 14 by an outside insulating member 92. However, the positive electrode outside conductive member 32 and the negative electrode outside conductive member 42 are not essential, and might be omitted in another embodiment.

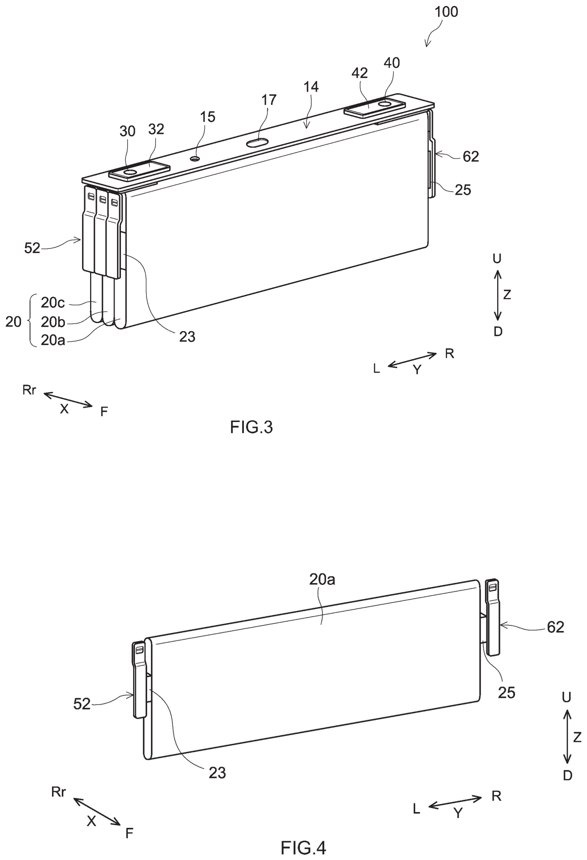

FIG. 3 is a perspective view that schematically shows the electrode assembly group 20 attached to the sealing plate 14. FIG. 4 is a perspective view that schematically shows an electrode assembly 20a. Regarding the nonaqueous electrolyte secondary battery 100 in accordance with the present embodiment, at an inside of the battery case 10, the electrode assembly group 20 including plural electrode assemblies 20a, 20b, 20c is accommodated. However, a number of the electrode assemblies arranged at the inside of the single outer case 12 is not particularly restricted, and thus might be 2 or more (plural), or might be 1. Although a detailed structure would be described later, each of the electrode assemblies 20a, 20b, 20c includes a positive electrode tab group 23 configured with plural positive electrode tabs 22t and includes a negative electrode tab group 25 configured with plural negative electrode tabs 24t. The positive electrode current collector part 50 configures a conduction path that electrically connects the positive electrode tab group 23 and the positive electrode terminal 30. In addition, the negative electrode current collector part 60 configures a conduction path that electrically connects the negative electrode tab group 25 and the negative electrode terminal 40. Here, the positive electrode tab group 23 is provided at one of end parts of the electrode assembly 20a, and the negative electrode tab group 25 is provided at the other one of end parts.

As shown in FIG. 2, the positive electrode current collector part 50 includes a positive electrode first current collector part 51 which is a plate-shaped conductive member configured to extend along an inner side surface of the sealing plate 14, and includes a positive electrode second current collector part 52 that is a plate-shaped conductive member configured to extend along the vertical direction Z. A lower end part of the positive electrode terminal 30 is configured to extend through the terminal taking out hole 18 of the sealing plate 14 toward the inside of the battery case 10, so as to be connected to the positive electrode first current collector part 51 (see FIG. 2). On the other hand, as shown in FIG. 2, regarding the positive electrode second current collector part 52, one end is connected to the positive electrode first current collector part 51, the other end is connected to the positive electrode tab group 23 of the electrode assembly group 20, and a connecting part J is formed. Here, the positive electrode tab group 23 of the electrode assembly group 20 is folded and bent to make the positive electrode second current collector part 52 and a side surface having the positive electrode tab group 23 of the electrode assemblies 20a, 20b, 20c be opposed to each other. By this, it is possible to reduce a width of the positive electrode tab group 23 in the long side direction Y. As a result, it is possible to increase coating widths in the long side direction Y of a positive electrode active material layer 22a an a negative electrode active material layer 24a included by the electrode assembly group 20, which would be described later, and thus it is possible to implement making the nonaqueous electrolyte secondary battery 100 have a higher capacity. Incidentally, the positive electrode first current collector part 51 and the positive electrode second current collector part 52 are preferably made of metal, and can be configured with, for example, aluminum, aluminum alloy, nickel, stainless steel, or the like.

As shown in FIG. 2, the negative electrode current collector part 60 includes a negative electrode first current collector part 61 that is a plate-shaped conductive member configured to extend along the inner side surface of the sealing plate 14, and includes a negative electrode second current collector part 62 that is a plate-shaped conductive member configured to extend along the vertical direction Z. A lower end part of the negative electrode terminal 40 is configured to extend through the terminal taking out hole 18 of the sealing plate 14 toward the inside of the battery case 10 so as to be connected to the negative electrode first current collector part 61 (see FIG. 2). On the other hand, as shown in FIG. 2, regarding the negative electrode second current collector part 62, one end is connected to the negative electrode first current collector part 61, the other end is connected to the negative electrode tab group 25 of the electrode assembly group 20, and the connecting part J is formed. Here, the negative electrode tab group 25 of the electrode assembly group 20 is folded and bent to make the negative electrode second current collector part 62 and a side surface having the negative electrode tab group 25 of the electrode assemblies 20a, 20b, 20c be opposed to each other. By this, similarly to the above described configuration in which the positive electrode tab group 23 is folded and bent, it is possible to implement making the nonaqueous electrolyte secondary battery 100 have the higher capacity. Incidentally, the negative electrode first current collector part 61 and the negative electrode second current collector part 62 are preferably made of metal, and might be made of, for example, copper, copper alloy, nickel, stainless steel, or the like.

The nonaqueous electrolyte secondary battery 100 in accordance with the present embodiment includes various insulating members attached to a portion between arbitrary members in order to inhibit a continuity between the arbitrary members.

Between the battery case 10 and the electrode assembly group 20, the insulating member is attached to inhibit the continuity. In particular, between the positive electrode outside conductive member 32 (or the negative electrode outside conductive member 42) and the outer side surface of the sealing plate 14, an outside insulating member 92 is disposed (see FIG. 2). By this, it is possible to inhibit the positive electrode outside conductive member 32 or the negative electrode outside conductive member 42 from conducting with the sealing plate 14.

At each of the terminal taking out holes 18, 19 of the sealing plate 14, a gasket 90 is installed. By this, it is possible to inhibit the positive electrode terminal 30 (or the negative electrode terminal 40) inserted into the terminal taking out holes 18, 19 from conducting with the sealing plate 14.

Between the positive electrode first current collector part 51 (or the negative electrode first current collector part 61) and the inner side surface of the sealing plate 14, an inside insulating member 94 is arranged. This inside insulating member 94 includes a plate-shaped base part 94a that is disposed between the positive electrode first current collector part 51 (or the negative electrode first current collector part 61) and the inner side surface of the sealing plate 14. By this, it is possible to inhibit the positive electrode first electrical collector part 51 or the negative electrode first electrical collector part 61 from conducting with the sealing plate 14. Further, the inside insulating member 94 includes a protruding part 94b that is configured to protrude from the inner side surface of the sealing plate 14 toward the electrode assembly group 20. By this, it is possible to regulate a movement of the electrode assembly group 20 in the vertical direction Z, so as to inhibit the electrode assembly group 20 and the sealing plate 14 from coming into direct contact with each other.

A material of each insulating member described above is not particularly restricted, if it has a predetermined insulating property. As an example, it is possible to use a synthetic resin material, such as polyolefin type resin (example: polypropylene (PP), polyethylene (PE)), fluorine type resin (example: perfluoro alkoxy alkane (PFA), polytetrafluoroethylene (PTFE)), or the like.

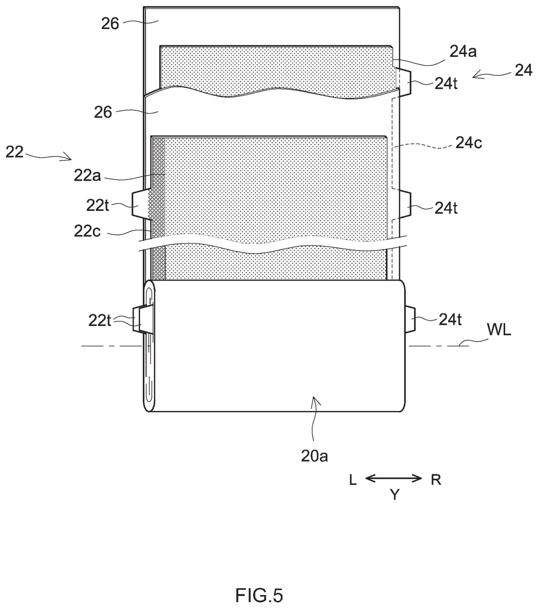

FIG. 5 is a schematic view that shows a configuration of the electrode assembly 20a. Although details would be explained below with the electrode body 20a used as an example, similar configuration can be applied to the electrode bodies 20b, 20c. As shown in FIG. 5, the electrode assembly 20a includes the positive electrode 22 and the negative electrode 24. The electrode assembly 20a herein is a flat-shaped wound electrode assembly in which the positive electrode 22 formed in a strip-like shape and the negative electrode 24 formed in a strip-like shape are laminated via the separator 26 formed in a strip-like shape and are wound therein with a winding axis WL treated as a center. The positive electrode 22 and the negative electrode 24 are examples of the first electrode and the second electrode which are disclosed herein.

The electrode assembly 20a is arranged inside the outer case 12 while being directed to make the winding axis WL be in parallel to the long side direction Y. In other words, the electrode assembly 20a is arranged inside the outer case 12 while being directed to make the winding axis WL be in parallel to the bottom wall 12a and be orthogonal to the shorter side wall 12c. An end surface of the electrode assembly 20a (in other words, a laminate surface on which the positive electrode 22, the negative electrode 24, and the separator 26 are laminated, and an end surface in the long side direction Y of FIG. 5) is opposed to the shorter side wall 12c. However, the electrode assembly 20a might be a laminate electrode assembly in which plural square-shaped (typically, rectangular-shaped) positive electrodes 22 and plural square-shaped (typically, rectangular-shaped) negative electrodes are stacked under an insulated state.

The positive electrode 22 includes, as shown in FIG. 5, a positive electrode substrate 22c and a positive electrode active material layer 22a that is formed on at least one surface (here, on both surfaces) of the positive electrode substrate 22c.

The positive electrode substrate 22c is formed in a strip-like shape and consists of an electrically conductive metal, such as aluminum, aluminum alloy, nickel, and stainless steel. The positive electrode substrate 22c here is a metal foil, in particular, an aluminum foil.

The positive electrode active material layer 22a is, as shown in FIG. 5, provided in a strip-like shape along a longitudinal direction of the strip-shaped positive electrode substrate 22c, and contains at least a positive electrode active material that can reversibly store and release the electrical charge carrier. From a perspective of reducing a temperature dependency of a battery voltage, which is described later, a density of the positive electrode active material layer is preferably equal to or more than 3.0 g/ml, or in further preferable, approximately or not less than 3.5 g/ml. In addition, from a similar perspective, an application amount of the positive electrode active material layer 24a is preferably equal to or more than 380 g/m$^2$, further preferably equal to or more than 410 g/m$^2$, or particularly in preferable, approximately or not less than 440 g/m$^2$.

As the positive electrode active material, it is preferable to contain at least one kind among at least Ni, Co, and Mn, and it is possible to use, for example, a lithium-transition metal complex oxide, such as lithium-nickel-cobalt-manganese composite oxide. When a total solid content of the positive electrode active material layer 22a is treated as 100 mass%, the positive electrode active material might occupy approximately 80 mass% or more, typically 90 mass% or more, or, for example, 95 mass% or more.

The positive electrode active material layer 22a might contain an arbitrary component other than the positive electrode active material, for example, an electrical conducting material, a binder, various additive components, or the like. As the electrically conducting material, it is possible to use, for example, a carbon material, such as carbon black (for example, acetylene black (AB)) and carbon nanotube. As the binder, it is possible to use, for example, PVdF, or the like.

The negative electrode 24 includes, as shown in FIG. 5, a negative electrode substrate 24c, and a negative electrode active material layer 24a that is formed on at least one surface (here, both surfaces) of the negative electrode substrate 24c.

The negative electrode substrate 24c is formed in a strip-like shape, and consists of, for example, an electrically conductive metal, such as copper, copper alloy, nickel, and stainless steel. The negative electrode substrate 24c herein is a metal foil, in particular, a copper foil.

As shown in FIG. 5, the negative electrode active material layer 24a is provided in a strip-like shape along the longitudinal direction of the strip-shaped negative electrode substrate 24c, and contains at least a negative electrode active material that can reversibly store and release the electrical charge carrier. From the perspective of reducing the temperature dependency of the battery voltage, which is described later, a density of the negative electrode active material layer is preferably equal to or more than 1.4 g/ml, or in further preferable, approximately or not less than 1.5 g/ml. In addition, from a similar perspective, an application amount of the negative electrode active material layer 24a is preferably equal to or more than 185 g/m$^2$, further preferably equal to or more than 220 g/m$^2$, or particularly in preferable, approximately or not less than 250 g/m$^2$.

The negative electrode active material is a negative electrode active material that can reversibly store and release the electrical charge carrier (for example, a carbon material, such as graphite, Si, a silicon oxide represented by $SiO_x$ (0.05 < x < 1.95), a lithium silicon oxide represented by $Li_xSi_yO_z$ (x, y, and z independently satisfy $0 \leq x, y, z \leq 1$), a lithium-containing lithium-silicon alloy represented by $Li_{21}Si_5$, or the like), and the negative electrode active material might occupy approximately 80 mass% or more, typically 90 mass% or more, or, for example, 95 mass% or more when a total solid content of the negative electrode active material layer 24a is treated as 100 mass%.

The negative electrode active material layer 24a might contain an arbitrary component other than the negative electrode active material, for example, a binder, a dispersing agent, various additive components, or the like. As the binder, for example, it is possible to use rubbers, such as styrene butadiene rubber (SBR). As the dispersing agent, for example, it is possible to use celluloses, such as carboxymethyl cellulose (CMC).

The separator 26 is a member that is configured to establish an insulation between the positive electrode active material layer 22a of the positive electrode 22 and the negative electrode active material layer 24a of the negative electrode 24. As the separator 26, for example, it is possible to suitably use a porous resin sheet that consists of a polyolefin type resin, such as polyethylene (PE) and polypropylene (PP). In addition, regarding the separator 26, a heat resistance layer (HRL) containing an inorganic filler might be provided on a surface of the above described resin sheet. As the inorganic filler, for example, it is possible to use alumina, boehmite, aluminum hydroxide, titania, or the like. In addition, it is preferable to provide an adhesion layer on a surface at one side or on surfaces at both sides of the separator 26. The adhesion layer could enhance an adhesive property with the positive electrode active material layer 22a or the negative electrode active material layer 24a that comes into contact with it. The adhesion layer contains, for example, polyvinylidene fluoride (PVdF), as the adhesion component. In addition, the adhesion layer could contain an inorganic particle, such as alumina and boehmite. The adhesion layer might be provided on a surface of the above described resin sheet, or might be provided on a surface of the HRL.

The nonaqueous electrolyte might be similar to conventional one, and is not particularly restricted. The nonaqueous electrolytic solution contains, for example, a nonaqueous type solvent and a supporting salt. The nonaqueous type solvent contains, for example, carbonates, such as ethylene carbonate, dimethyl carbonate, and ethyl methyl carbonate. The supporting salt is, for example, a fluorine-containing lithium salt, such as $LiPF_6$. However, the nonaqueous electrolytic solution might be formed in a solid shape (a solid electrolyte) and might be integrated with the electrode assembly group 20.

2. Manufacturing method of nonaqueous electrolyte secondary battery

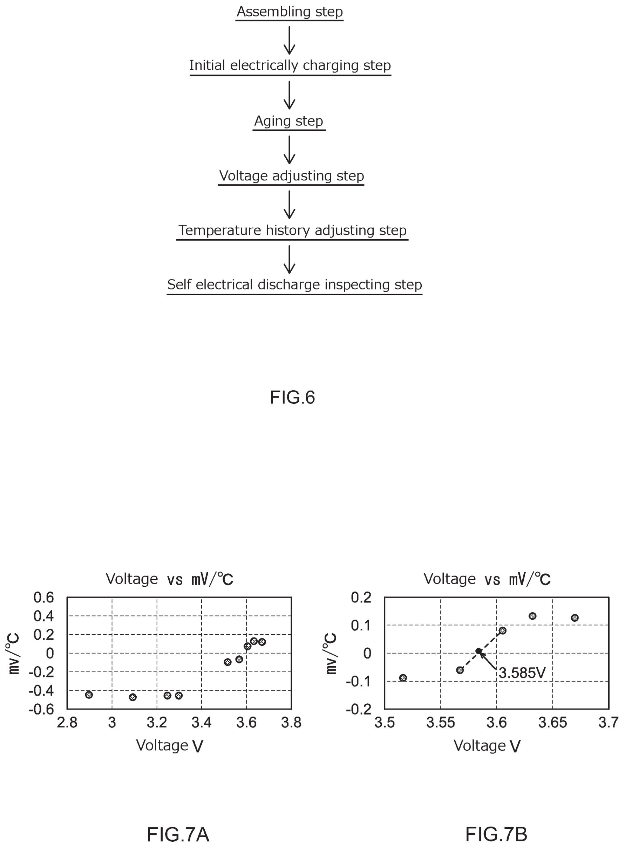

FIG. 6 is a flow that shows a part of the manufacturing method of the nonaqueous electrolyte secondary battery. Below, each step would be explained.

<Assembling step >

At an assembling step, the above described electrode assembly and the nonaqueous electrolyte are accommodated at the inside of the battery case so as to prepare an assembly body. In the present description, the wording "assembly body" represents a nonaqueous electrolyte secondary battery before an initial electrically charging step and an aging step, which are described later, are performed.

<Initial electrically charging step>

At the initial electrically charging step, the above described assembly body is electrically charged to have a predetermined voltage V0. In particular, an electrode of an outside charging device is connected to an electrode terminal of the assembly body, and then the electrical charge is performed at a room temperature (for example, about 20°C to 30°C) until it reaches the predetermined voltage V0.

As one example of the electrical charging process at that time, it is possible to perform a constant current constant voltage electrical charge (CC-CV electrical charge), in which a constant current electrical charge at about 0.1 C to 10 C is performed until an inter-terminal voltage (a voltage between the positive electrode and the negative electrode) reaches a predetermined value and then a constant voltage electrical charge is performed until a battery voltage reaches about 3.4 V to 3.6 V. However, a condition of the electrical charging process at the present step is not particularly restricted, and can be suitably changed in accordance with a standard of a sealed type battery which is a target to be manufactured.

Incidentally, at the present step, a number of times to perform the electrically charging process is not particularly restricted. For example, at the present step, the electrical charge and discharge cycle, in which the electrically charging process and the electrically discharging process are combined, might be repeated multiple times.

At the initial electrical charge on an nonaqueous electrolyte secondary battery, the electrode active material can decompose an organic matter, such as electrolytic solution component and additive agent, which comes into contact with the electrode active material at a potential equal to or more than a predetermined value. This decomposition product becomes a SEI membrane and then is deposited on the surface of the electrode active material. **In** other words, the SEI membrane is configured with a mixture of decomposition products of the electrolytic solution component, the additive agent, and the like. The SEI membrane does not have an electron conductivity, but does allow an ion to pass through because it is not a continuous membrane. Thus, the SEI membrane is used for stabilizing and deactivating the electrode active material surface and can suppress an excessive decompose of the electrolytic solution component, or the like.

From a perspective of forming the SEI membrane having a high quality at the initial electrically charging step, the above described predetermined voltage V0 is preferably equal to or more than 3.48 V, might be equal to or more than 3.54 V, or might be equal to or more than 3.58 V.

<Aging step >

At the aging step, the assembly body after the initial electrically charging step is held under a high temperature environment. By performing the aging step, an extra component of the SEI membrane formed on the surface of the negative electrode at the above described initial electrically charging step is decomposed, and thus a modification of the SEI membrane is implemented.

Incidentally, a condition of the aging step can be suitably adjusted according to an aspect of the required SEI membrane modification, and it is not particularly restricted. For example, an aging temperature at the aging step can be equal to or more than 30°C, preferably equal to or more than 40°C, for example, equal to or more than 50°C, or further equal to or more than 60°C. Although an upper limit of the aging temperature is not particularly restricted, for example, it is possible as a guide to be approximately equal to or less than 80°C. As for a temperature control at the aging step, for example, it is possible to use a thermostatic chamber or the like. A performing time (an aging time) of the aging step can be, for example, suitably changed according to the aging temperature, and thus it is not particularly restricted. For example, when the aging temperature is set to be about 45 to 70°C, it is preferable to make the aging time be about 3 to 20 hours. In addition, when the aging temperature is set to be about 70 to 75°C, it is preferable to make the aging time be about 1 to 15 hours.

In addition, at the aging step, it is preferable to perform aging while applying a load in a short side direction X of the assembly body. An amount of the load applied on the assembly body at the aging step is not particularly restricted, but it is preferably 0.5 to 0.7 MPa.

<Voltage adjusting step>

At a voltage adjusting step, the above described assembly body after the above described aging step is adjusted to have a predetermined voltage V1. It is good if a temperature of the nonaqueous electrolyte secondary battery at the time of performing the voltage adjusting step is lower than a temperature of it at the time of performing the aging step, and thus it might be, for example, a room temperature (about 20 to 30°C). Incidentally, after the aging step is performed, the nonaqueous electrolyte secondary battery might be intentionally cooled down to the room temperature before the voltage adjusting step is started, or might be naturally cooled down. The predetermined voltage V1 is determined in accordance with the temperature dependency of the battery voltage. Thus, regarding a manufacture of the nonaqueous electrolyte secondary battery in accordance with the present disclosure, as a preparation in advance, it is required, for the secondary battery expected to be actually used, to measure the temperature dependency of the battery voltage at an arbitrary electrical charge voltage. In the present description, the temperature dependency of the battery voltage means a change amount of the battery voltage according to a temperature change per a unit amount of the battery.

As for a derivation method of the temperature dependency of the battery voltage, the electrical charge voltage of the nonaqueous electrolyte secondary battery is adjusted to be an arbitrary value (for example, 3.5 V), and then the battery voltages (v1, v2) at two arbitrary temperatures (for example, t1 = 25°C, t2 = 30°C) are measured. After that, by Formula (1) described below, the derivation is performed.

$$\text{Temperature dependency of battery voltage} = (v2 - v1)/(t2 - t1) \quad \text{Formula (1)}$$

Then, when the temperature dependency of battery voltage < 0 is satisfied, the temperature dependency of the battery voltage of the nonaqueous electrolyte secondary battery is treated to be negative.

FIG. 7 (A) is a graph that shows the temperature dependency of the battery voltage measured under 25°C environment at an arbitrary electrical charge voltage. FIG. 7 (B) is a graph in which a part of FIG. 7 (A) is enlarged. Incidentally, it is not always required that the self electrical discharge inspection is performed at 25°C, and thus the temperature of it is not restricted. As shown in FIG. 7, regarding the nonaqueous electrolyte secondary battery according to the present disclosure, the temperature dependency of the battery voltage becomes a negative value when the electrical charge voltage is less than 3.585 V. On the other hand, when the electrical charge voltage is equal to or more than 3.585 V, the temperature dependency of the battery voltage becomes a positive value.

When the temperature dependency of the battery voltage is the negative value, the battery voltage is increased according to a decrease in the battery temperature. At that time, a negative electrode potential is increased according to the decrease in the battery temperature, but the electrical charge carrier (here, the lithium ion) configuring an electric double layer of a negative electrode interface is released according to this into the electrolyte from a negative electrode interface vicinity, and then the negative electrode potential is reduced according to the concentration change of it. After that, in a situation where the battery is heated so as to make the temperature be again returned to an original temperature but then the above described electrical charge carrier does not completely come back into the electric double layer existing on the negative electrode interface, the reduction in the negative electrode potential is maintained merely for that amount, and the battery voltage is increased as a whole of the battery. Further, regarding the nonaqueous electrolyte secondary battery that has passed through the above described temperature changing process, a concentration of the electrical charge carrier in the electric double layer existing on the negative electrode interface is comparatively lower (the released electrical charge carrier does not completely come back), and thus, even if the temperature is then made to be changed, the concentration change of the electrical charge carrier in the electric double layer is little and therefore it is rare to cause a fluctuation on the battery voltage. Incidentally, the explanation about the above described action mechanism of the present technique is an estimate and thus is not to restrict the present technique.

The predetermined voltage V1 described above is, from a perspective of making the temperature dependency of the battery voltage of the nonaqueous electrolyte secondary battery in accordance with the present disclosure be negative and then suitably implementing an effect of reducing an absolute value of it, preferably less than 3.585 V, further preferably equal to or less than 3.4 V, or preferably in particular equal to or less than 3.2 V.

<Temperature history adjusting step>

At a temperature history adjusting step, a temperature of the above described assembly body at a temperature decrease starting time after the above described voltage adjusting step is treated as T1, the temperature of the above described assembly body is decreased to reach a temperature T2 being lower than the above described T1, and then the temperature of the above described assembly body is increased to reach a temperature T3 being higher than the above described T2.

The above described T1 is a temperature of the nonaqueous electrolyte secondary battery at the time of starting the temperature history adjusting step, thus is not particularly restricted, and might be, for example, a room temperature (for example, about 20 to 30°C). A temperature difference between the above described T1 and the above described T2 is, from a perspective of suitably implementing the reduction in the temperature dependency of the battery voltage of the nonaqueous electrolyte secondary battery in accordance with the present disclosure, preferably equal to or more than 3°C, further preferably equal to or more than 5°C, or preferably in particular equal to or more than 7°C. Incidentally, an upper limit of the temperature difference is not particularly restricted, for example, might be equal to or less than 20°C, or might be equal to or less than 15°C. A method for decreasing the temperature of the assembly body from the above described T1 to the above described T2 is not particularly restricted, and, for example, it is good to use a thermostatic chamber.

The above described T3 is a temperature at a time when the temperature history adjusting step is ended, it is enough if the above described standard is satisfied, and it might be a value the same as or different from the above described T1. Incidentally, a method for increasing the temperature of the assembly body from the above described T2 to the above described T3 is not particularly restricted and, for example, a thermostatic chamber might be used. Incidentally, a holding time from a situation in which it reaches the above described T2 to a situation in which the temperature increase is started is, from a perspective of reducing the temperature dependency of the battery voltage of the nonaqueous electrolyte secondary battery in accordance with the present disclosure, preferably equal to or more than 24 hours, further preferably equal to or more than 36 hours, or preferably in particular equal to or more than 48 hours.

<Self electrical discharge inspecting step>

After the above described temperature history adjusting step, the self electrical discharge inspection is performed at a temperature T4 being higher than the above described T2. The above described T4 is a temperature at a time when the self electrical discharge inspecting step is started, it is enough if the above described standard is satisfied, and it might be a value the same as or different from the T3. A temperature difference between the above described T2 and the above described T4 is, from the perspective of suitably implementing the reduction in the temperature dependency of the battery voltage of the nonaqueous electrolyte secondary battery in accordance with the present disclosure, preferably equal to or more than 3°C, further preferably equal to or more than 5°C, or preferably in particular equal to or more than 7°C.

At the self electrical discharge inspection, the assembly body after the temperature history adjusting step is held under a room temperature (for example, about 20 to 30°C), and then a decreasing amount of the battery voltage caused by the self electrical discharge is measured. Then, an inspection whether the inside short circuit is caused on the assembly body or not (good quality product or not) is performed on the basis of the decreasing amount of the battery voltage. The battery in which the inside short circuit is caused, in comparison to the battery in which the inside short circuit is not caused, have a tendency that an electrical discharge amount depending on the self electrical discharge becomes larger and a difference between the battery voltages before and after the self electrical discharge becomes larger. Incidentally, a method for performing the temperature adjustment at the time of performing the self electrical discharge inspection is not particularly restricted, and it is good, for example, to use the thermostatic chamber.

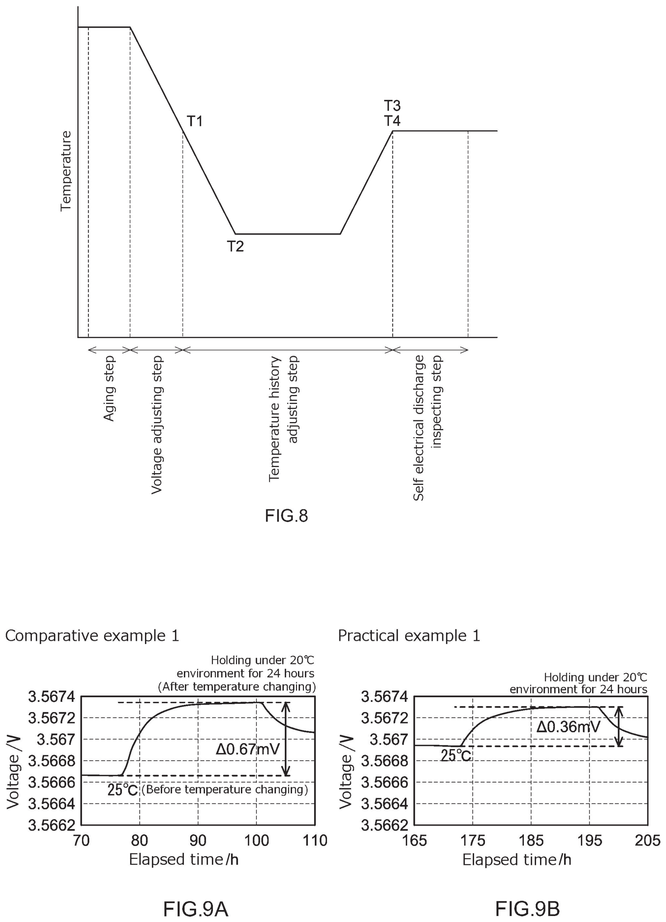

FIG. 8 is a view that schematically shows the temperature changing process of the assembly body at the manufacturing step. Then, the manufacturing method of the nonaqueous electrolyte secondary battery in accordance with the present disclosure contains the above described step. Incidentally, for a manufacturing step from this point, it is possible to manufacture according to a conventionally known manufacturing method.

1. Test example

Below, a test example relating to the herein disclosed technique would be explained, but it is not intended to restrict the herein disclosed technique into the test example.

(1) Assembly body preparing step

(A) Practical example 1

A lithium-nickel-cobalt-manganese base composite oxide (NCM) as the positive electrode active material, polyvinylidene fluoride (PVdF) as the binder, and a carbon nanotube (CNT) as the electrically conducting material were weighed to make mass ratios satisfy NCM : PVdF : CNT = 97.5 : 1.5 : 1, and were mixed in N-methyl-2-pyrrolidone (NMP), and thus a positive electrode slurry whose density was 3.55 g/mL was prepared. This positive electrode slurry was applied to coat both surfaces of the long strip-shaped positive electrode substrate (the aluminum foil, thickness was 12 $\mu$m), and then it was dried. This was cut to have a predetermined size, and then rolled by a rolling press, and thus the positive electrode sheet including the positive electrode active material layer, which was disposed on both surfaces of the positive electrode substrate and whose application amount was 450 g/m$^2$, was obtained.

Next, a natural graphite (C) as the negative electrode active material, a styrene butadiene rubber (SBR) as the binder, and a carboxymethyl cellulose (CMC) as the thickening agent were weighed to make mass ratios satisfy C : SBR : CMC = 98.5 : 1 : 0.5, and then mixed in a water, and thus a negative electrode slurry whose density was 1.50 g/mL was prepared. This negative electrode slurry was applied to coat both surfaces of the long strip-shaped negative electrode substrate (the copper foil, thickness was 9 $\mu$m), and then was dried. This was cut to have a predetermined size, and then rolled by a rolling press, and thus the negative electrode sheet including a negative electrode active material layer, which is disposed on both surfaces of the negative electrode substrate and whose application amount was 250 g/m$^2$.

Then, the separator was prepared which had a three layers structure consisting of PE/PP/PE and whose thickness was 14 $\mu$m, and then the positive electrode sheet, the separator, and the negative electrode sheet were stacked in this order. After the electrode terminal was attached to the above manufactured electrode assembly, it was accommodated at the inside of the battery case together with the nonaqueous electrolyte.
As the nonaqueous electrolyte, one was used in which the LiPF$_6$ as the supporting salt was dissolved at a concentration being 1.15 mol/L into a mixed solvent containing ethylene carbonate (EC), dimethyl carbonate (DMC), and ethyl methyl carbonate (EMC) so as to make volume ratios satisfy EC : DMC : EMC = 3 : 3 : 4.

(B) Comparative example 1

Similarly to the practical example 1, the assembly body was made.

(2) Evaluation test preparation

(A) Practical example 1

• Initial electrically charging step

The assembly body prepared at the assembling step was subjected to a constant current electrical charge under 25°C environment by a current value being 0.1 C until it reached a predetermined upper limit voltage, and then was subjected to a constant current electrical discharge until it reached 3.58 V, so that an initial electrical charge was performed.

• Aging step

The assembly body after the initial electrical charge was held under 57°C environment for 6 hours.

• Voltage adjusting step

The assembly body after the aging step was cooled down until it reached 25°C, then an electrical charge and discharge was performed, and thus the electrical charge voltage was made to be 3.567 V.

• Temperature history adjusting step

After the voltage adjusting step, the assembly body being at 25°C (T1) was held under 20°C environment for 24 hours, and thus cooled down to be at 20°C (T2). Then, the assembly body was held under 25°C environment for 24 hours, and thus heated up to be at 25°C (T3).

(B) Comparative example 1

Except for a matter in which the temperature history adjusting step was not performed, the evaluation test preparation was performed similarly to Practical example 1.

2. Evaluation test

(1) Practical example 1

A voltage E1 of the above described assembly body, on which the temperature history adjusting step was ended and which was at 25°C (T4), was measured, and then a voltage E2 was measured after it was held under 20°C environment for 24 hours. A difference between the E2 and the E1 was divided by a temperature change amount, so that the temperature dependency of the battery voltage was measured.

(2) Comparative example 1

The voltage E1 of the assembly body, being at 25°C (corresponding to T4) after the voltage adjusting step (the temperature history adjusting step was not performed), was measured, and then the voltage E2 was measured after it was held under 20°C environment for 24 hours. The difference between the E2 and the E1 was divided by the temperature change amount, so that the temperature dependency of the battery voltage was measured.

Test results are summarized on Table 1 and FIG. 9. FIG. 9 (A) is a graph that shows the temperature dependency of the battery voltage in accordance with one embodiment. FIG. 9 (B) is a graph in which a part of FIG. 9 (A) is enlarged.

[Table 1]

Table 1

| | | Practical example 1 | Comparative example 1 |
|---|---|---|---|
| Temperature history | T1 [°C] | 25 | 25 |
| | T2 [°C] | 20 | - |
| | T3 [°C] | 25 | - |
| | T4 [°C] | 25 | 25 |
| Negative electrode active material layer | Density [g/mL] | 1.50 | 1.50 |
| | Application amount [g/m$^2$] | 250 | 250 |
| Voltage E1 [V] at 25°C | | 3.567 | 3.567 |
| Voltage E2 [V] at 20°C | | 3.56736 | 3.56767 |
| E2 - E1 [mV] | | 0.36 | 0.67 |
| Temperature dependency of battery voltage [mV/°C] | | -0.072 | -0.134 |

Regarding Practical example 1, the temperature dependency of the battery voltage showed a negative value and the absolute value of it was comparatively small. In particular, as shown by Table 1, the absolute value of the temperature dependency per 1°C was less than 0.1°C. On the other hand, regarding Comparative example 1, the electrical charge voltage was adjusted at the voltage adjusting step to be equal to or less than 3.585 V which was going to lead the temperature dependency of the battery voltage to be negative, but the adjustment on the temperature history was not performed, and thus the absolute value of it became comparatively larger. In particular, as shown by Table 1, the absolute value of the temperature dependency per 1°C exceeded 0.1°C.

Up to this point, a detailed description has been given by way of specific embodiments, which are merely illustrative, and is not construed as limiting the scope of the appended claims. The technology according to the appended claims includes various modifications and changes of the embodiments described up to this point.

[Reference Signs List]

10 Battery case

12 Outer case
14 Sealing plate
20 Electrode assembly group
20a, 20b, 20c Electrode assembly
22 Positive electrode
22a Positive electrode active material layer
22c Positive electrode substrate
22t Positive electrode tab
24 Negative electrode
24a Negative electrode active material layer
24c Negative electrode substrate
24t Negative electrode tab
26 Separator
30 Positive electrode terminal
40 Negative electrode terminal
50 Positive electrode current collector part
60 Negative electrode current collector part
100 Nonaqueous electrolyte secondary battery

**Claims**

1. A manufacturing method of a nonaqueous electrolyte secondary battery (100) that comprises an electrode assembly (20a) having a positive electrode (22) and a negative electrode (24) and comprises a nonaqueous electrolyte, the manufacturing method, comprising:

   assembling step for preparing an assembly body in which the electrode assembly (20a) and the nonaqueous electrolyte are accommodated by a battery case (10);
   an initial electrically charging step for electrically charging the assembly body until having a predetermined voltage V0;
   an aging step for storing the assembly body at 45°C or more for 3 hours or more after the initial electrically charging step;
   a voltage adjusting step for adjusting the assembly body to have a voltage V1 being less than 3.585 V after the aging step;
   a temperature history adjusting step for treating a temperature of the assembly body at a temperature decrease starting time to be T1 after the voltage adjusting step, for cooling down the assembly body until having a temperature T2 being lower than the T1, and for heating up the assembly body until having a temperature T3 being higher than the T2; and
   a self electrical discharge inspecting step for performing a self electrical discharge inspection at a temperature T4 being higher than the T2 after the temperature history adjusting step.

2. The manufacturing method of the nonaqueous electrolyte secondary battery (100) according to claim 1, wherein

   the negative electrode (24) comprises a negative electrode substrate (24c) and a negative electrode active material layer (24a) that is formed on at least one surface of the negative electrode substrate (24c),
   a density of the negative electrode active material layer (22a) is equal to or more than 1.4 g/mL, and an application amount is equal to or more than 185 g/m$^2$.

3. The manufacturing method of the nonaqueous electrolyte secondary battery (100) according to claims 1 or 2, wherein a temperature difference between the T2 and the T4 is equal to or more than 3°C.

FIG.1

FIG.2

FIG.3

FIG.4

FIG.5

Assembling step

↓

Initial electrically charging step

↓

Aging step

↓

Voltage adjusting step

↓

Temperature history adjusting step

↓

Self electrical discharge inspecting step

FIG.6

FIG.7A

FIG.7B

FIG.8

Comparative example 1

FIG.9A

Practical example 1

FIG.9B

## EUROPEAN SEARCH REPORT

**Application Number**

EP 25 21 4970

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/103096 A1 (IKEDA HIROAKI [JP] ET AL) 28 March 2024 (2024-03-28) * paragraphs [0006], [0047], [0053], [0054], [0072] *<br>----- | 1-3 | INV.<br>H01M4/04<br>H01M10/44<br>H01M10/0525 |
| A | US 2024/103095 A1 (IKEDA HIROAKI [JP] ET AL) 28 March 2024 (2024-03-28) * paragraph [0030] - paragraph [0035] *<br>----- | 1-3 | |
| A | JP 2014 149988 A (TOYOTA MOTOR CORP) 21 August 2014 (2014-08-21) * abstract *<br>----- | 1-3 | |

|  |
|---|
| **TECHNICAL FIELDS SEARCHED (IPC)** |
| H01M |

The present search report has been drawn up for all claims

| Place of search | Date of completion of the search | Examiner |
|---|---|---|
| Munich | 10 June 2026 | Topalov, Angel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 4970

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2026

| Patent document cited in search report | Publication date | Patent family member(s) | | Publication date |
|---|---|---|---|---|
| US 2024103096 A1 | 28-03-2024 | CN | 117747982 A | 22-03-2024 |
| | | JP | 7611205 B2 | 09-01-2025 |
| | | JP | 2024045812 A | 03-04-2024 |
| | | US | 2024103096 A1 | 28-03-2024 |
| US 2024103095 A1 | 28-03-2024 | CN | 117741499 A | 22-03-2024 |
| | | JP | 7605797 B2 | 24-12-2024 |
| | | JP | 2024045813 A | 03-04-2024 |
| | | US | 2024103095 A1 | 28-03-2024 |
| JP 2014149988 A | 21-08-2014 | JP | 5880876 B2 | 09-03-2016 |
| | | JP | 2014149988 A | 21-08-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012084332 A